# EUROPEAN PATENT APPLICATION

(11) **EP 1 071 091 A1**
(43) Date of publication of application: **24.01.2001**
(21) Application number: 00900178.5
(22) Date of filing: 11.01.2000
(51) Int. Cl.: G11B 20/10

(54) **INFORMATION SIGNAL RECORDER WITH CHARGING FUNCTION AND CHARGING TERMINAL**

(30) Priority: 11.01.1999 JP 440299; 20.12.1999 JP 36179799
(71) Applicant: Sony Corporation, Tokyo 141-0001 (JP)
(72) Inventor: HIRAI, Jun, Sony Corporation, Shinagawa-ku, Tokyo 141-0001 (JP)
(74) Representative: Pratt, Richard Wilson
(86) International application number: JP0000085
(87) International publication number: WO0042611

(57) **Abstract**

In a recording system having an accounting function, in recording a copy target information signal onto a recording medium, an identification signal for identifying the contents of the information signal is saved in a recording machine, and at the time of copy, the saved identification signal and the identification signal of an information signal to be newly recorded are compared with each other to discriminate whether or not copy and recording of the same information signal was carried out by the recording machine in the past, thereby discriminating whether or not recording should be permitted on condition that accounting is carried out, on the basis of the result of comparison. If the information signal was copied in the past, copy and recording is permitted on condition that accounting is carried out, thereby preventing unlimited first-generation copy.

## Description

### Technical Field

This invention relates to a recording device which enables recording of information signals such as audio signals or video signals while limiting the copy of the information signals, and a recording system using this recording device. More particularly, this invention relates to a recording device which enables copy and recording of information signals on condition that accounting is carried out, a recording system using this recording device, and an accounting terminal device used for this recording system.

### Background Art

With the popularization of digital contents produced by converting work information such as a musical tune or an image to digital data and recorded on a recording medium or in an information processing unit such as a computer, there arises a problem that the interest of the copyright holder is damaged by unauthorized copy of the digital contents. In an equipment for recording and reproducing audio data or picture data as analog signals, the quality of the information signals is deteriorated by repeated copy because of the nature of analog signals. On the contrary, in an equipment for recording and reproducing audio data or picture data as digital data, deterioration in the quality of the information signals due to repeated copy does not occur in principle. Consequently, with respect to the information processed as digital data, it is possible to carry out repeated copy with substantially the same quality as the first recorded data. Since the repeated copy of the information signals with the same quality is possible, copy is made for a number of times, thus seriously damaging the interest of the copyright holder.

In consideration of such a characteristic of digital data that no deterioration in the quality is caused by repeated copy for multiple times, multiple copy of digital contents made up of digital data is limited by using additional information for limiting the multiple copy.

In order to limit such multiple copy of digital data, a copyright protection policy using a generation-limiting copy control system called SCMS (Serial Copy Management System) is employed, which permits copy once but prohibits copy from a work once copied. This SCMS is used for compact discs (CD), which are reproduction-only optical discs, and magneto-optical discs and digital audio tapes (DAT), which enable re-recording of data.

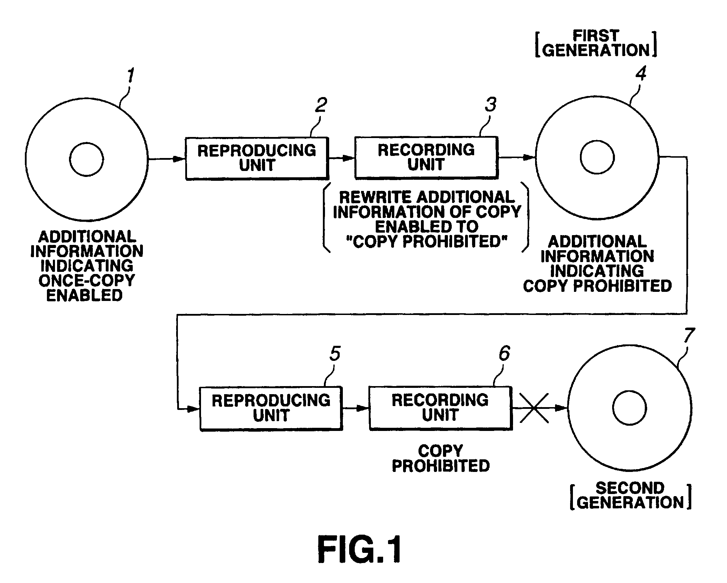

The copy control system of the SCMS will now be described with reference to Fig. 1.

On a disc 1 used in this case, audio signals of an original source are digitally recorded. The digital audio signals are recorded in a predetermined recording format on the disc 1, and additional information enabling once-copy in accordance with the SCMS is recorded in a specified area of the digital signals.

A reproducing unit 2 reproduces the digital audio signals from the signals read out from the disc 1 and transmits the digital audio signals together with the additional information to a recording unit 3. The reproducing unit 2 transmits the audio signals to the recording unit 3 at a speed equal to the normal reproduction speed.

The recording unit 3, having received the digital audio signals, recognizes that copy of the input digital signals is possible when the additional information of the digital audio signals indicates once-copy enabled. On confirming that the additional information indicates once-copy enabled, the recording unit 3 copies and records the digital signals to a recordable disc 4. In doing so, the recording unit 3 rewrites the additional information from the state of "once-copy enables" to the state of "copy prohibited". On the disc 4, the digital signals are copied and recorded, and information indicating "copy prohibited" is recorded as the additional information.

In the case where data is reproduced by a reproducing unit 5 from the disc 4 on which the first copy and recording has been carried out, that is, the first-generation disc, and the reproduced data is supplied to a recording unit 6, the recording unit 6 detects that the additional information is in the state of "copy prohibited", thereby prohibiting recording to a recordable disc 7. The copy speed in this case is equal to the transmission speed of the audio signals from the reproducing unit 2, and also equal to the speed of reproducing the audio signals in the standard reproduction time, that is, the normal reproduction speed.

The standard reproduction time in the case of audio signals is the real-time reproduction speed, that is, the reproduction speed along the normal human perception. In the case of data, however, the standard reproduction speed is determined by each reproducing equipment regardless of the human perception.

In the foregoing manner, the SCMS system performs control to permit the first-generation copy by the recording unit but to prohibit the second-generation copy from the recording unit of the first generation, thereby protecting the interest of the copyright holder.

Such protection of the interest of the copyright holder in accordance with the SCMS system is carried out by limiting the second-generation copy. However, the first-generation copy from one original source is carried out for a number of times, thus producing a plurality of copied information recording media. As described above, in the case where the copy speed is equal to the normal reproduction speed, the time required for copy is equal to the standard reproduction time and therefore the copy is time-consuming. Thus, it is practically difficult to copy data for a plurality of times.

Meanwhile, for recording digital data to a disc-shaped recording medium or a semiconductor memory, it is possible to easily carry out high-speed copy. Particularly, in the case where 1/100 data compression is carried out on audio data using a signal compression technique, copy at a 100-tuple speed is possible.

In this manner, with respect to digital data, since the first-generation copy for a very short time is made possible by using the data compression technique, it is possible to produce a large amount of the first-generation copies from one original source in a short period of time, thus seriously damaging the interest of the copyright holder. Thus, it is necessary to limit the copy more strictly and to protect the interest of the copyright holder, in consideration of changes of the technical environment related to the copy as described above.

### Disclosure of the Invention

In view of the foregoing status of the art, it is an object of the present invention to provide a recording device and an accounting terminal device which realize secure protection of work data such as musical tunes and images and enable protection of the interest of the copyright holder, and a recording medium used for these devices.

It is another object of the present invention to provide a recording device and an accounting terminal device which enable copy of information signals of work data on condition that accounting is carried out and thus enable protection of the interest of the copyright holder, and a recording medium used for these devices.

A recording device according to the present invention includes: a recording control section for recording an information signal onto a recording medium; a recording record storage section for storing the identifier of an information signal recorded on the recording medium by the recording control section; an accounting section for carrying out accounting processing to a user; an identifier detection section for detecting the identifier of an information signal to be recorded by the recording control section; and a control section for controlling the recording of the information signal to be recorded onto the recording medium by the recording control section in accordance with the result of comparison between the identifier of the information signal detected by the identifier detection section and the identifier of the information signal stored in the recording record storage section and the accounting status obtained by the accounting section.

The recording control section enables recording of the information signal to the recording medium at a speed higher than a predetermined recording speed. The control section controls the recording of the information signal to be recorded onto the recording medium by the recording control section in accordance with the result of comparison between the identifier of the information signal detected by the identifier detection section and the identifier of the information signal stored in the identifier storage section and the accounting status obtained by the accounting section when the information signal is recorded by the recording control section at the speed higher than the predetermined recording speed.

The control section permits the recording of the information signal to be recorded onto the recording medium by the recording control section when the same identifier as the identifier of the information signal detected by the identifier detection section is not stored in the recording record storage section, and the control section determines permission/prohibition of the recording of the information signal to be recorded onto the recording medium by the recording control section in accordance with the accounting status obtained by the accounting section when the same identifier as the Identifier of the information signal detected by the identifier detection section is stored in the recording record storage section.

The recording record storage section stores information indicating the number of times of recording corresponding to the identifier of the recorded information signal when the recording of the information signal onto the recording medium is carried out by the recording control section. The control section permits further recording of an information signal onto the recording medium on condition that accounting processing is carried out by the accounting section, when it is detected that the number of times of recording of the information signal to be recorded exceeds a predetermined number of times of recording permission from the information indicating the number of times of recording with respect to the information signal having the identifier stored in the recording record storage section which is the same as the identifier of the information signal detected by the identifier detection section.

A recording system according to the present invention includes: an output section for outputting an information signal; a recording control section for recording an information signal outputted from the output section onto a recording medium; a recording record storage section for storing the identifier of an information signal recorded on the recording medium by the recording control section; an accounting section for carrying out accounting processing to a user; an identifier detection section for detecting the identifier of an information signal to be recorded by the recording control section; and a control section for controlling the recording of the information signal to be recorded onto the recording medium by the recording control section in accordance with the result of comparison between the identifier of the information signal detected by the identifier detection section and the identifier of the information signal stored in the recording record storage section and the accounting status obtained by the accounting section.

The recording system further includes: an authentication processing section for carrying out authentication processing of the recording control section; and a transfer control section for carrying out transfer control of the information signal outputted from the output section to the recording control section in accordance with the result of authentication by the authentication processing section.

The recording system further includes an encryption section for encrypting the information signal outputted from the output section. The transfer control section transfers the information signal encrypted by the encryption section and key information for decryption to the recording control section when the recording by the recording control section of the information signal outputted from the output section is permitted.

An accounting terminal device used for the recording system according to the present invention includes: a connection section to which an accounting information storage medium is connected, the accounting information storage medium having recorded thereon accounting information related to recording of an information signal to a recording medium; a read section for reading out the accounting information stored on the accounting information storage medium connected to the connection section; and an accounting section for changing the accounting information. The accounting section changes amount information included in the accounting information in accordance with the amount of inserted money.

The accounting terminal device further includes a communication section for transmitting information through a predetermined communication channel to an accounting information totaling center. On the accounting information storage medium, the identifier of the information signal recorded on the recording medium and the information indicating the number of times of recording of the information signal identified by the respective identifier are recorded. The identifier of the information signal recorded on the recording medium and the information indicating the number of times of recording of the information signal identified by the respective identifier are read out together with the accounting information by a read section, and the accounting information, the identifier of the information signal recorded on the recording medium and the information indicating the number of times of recording of the information signal identified by the respective identifier are sent to the accounting information totaling center through the communication channel.

A recording medium used in the present invention includes: an information signal recording section in which an information signal is recorded; an amount information storage section for storing information related to the amount of money; and a control section for changing the information related to the amount of money stored in the amount information storage section and for changing the information related to the amount of money in accordance with an information input indicating that a predetermined amount of money has been paid, when the information signal is recorded into the information signal recording section. The control section carries out subtraction processing with respect to the information related to the amount of money stored in the amount information storage section when the information signal is recorded into the information signal recording section, and the control section carries out addition processing with respect to the information related to the amount of money when payment information is inputted.

The other objects and specific advantages of the present invention will be made apparent from the following description of embodiments.

### Brief Description of the Drawings

Fig.1 is a block diagram showing a conventional copy control system.
Fig.2 is a block diagram showing a recording system according to the present invention.
Fig.3 is a block diagram showing an accounting terminal device.
Fig.4 is a flowchart showing the operation of the accounting terminal device.
Fig.5 is a flowchart showing the processing operation at the time of copy.
Fig.6 is a block diagram showing another exemplary recording system according to the present invention.
Fig.7 is a block diagram showing a recording medium used for the recording system shown in Fig.6.
Figs.8 and 9 are flowcharts for explaining the operation of the recording system shown in Fig.6.
Fig.10 is a block diagram showing another exemplary copy control system according to the present invention.
Fig.11 is a block diagram showing a reproducing machine of another exemplary copy control system according to the present invention.
Fig.12 is a flowchart for explaining the operation of the reproducing machine shown in Fig.11.
Fig.13 is a block diagram showing a recording machine of another exemplary copy control system according to the present invention.
Figs.14, 15 and 16 are flowcharts for explaining the operation of the recording machine shown in Fig.13.

### Best Mode for Carrying Out the Invention

An information signal recording device according to the present invention, and an information signal recording system and recording method using this recording device will now be described with reference to the drawings.

### [First Embodiment]

This embodiment enables one recording device to copy and record once free of charge, and enables copy of the same information signal for the second and subsequent times on condition that the copy fee is paid. Specifically, this embodiment enables one recording device to copy for the second and subsequent times on condition that the user approves accounting.

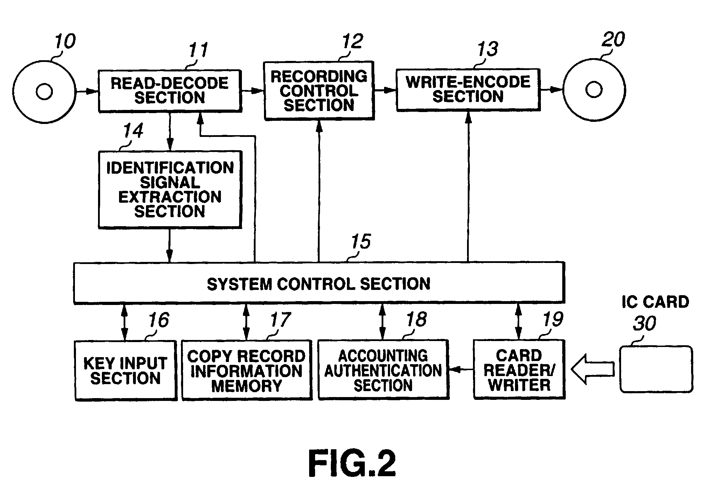

A recording system using the recording device having such a function is formed by integrating the recording device and a reproducing device for copying work information such as musical tunes and images, as shown in Fig.2. The work information copied by using this recording system is audio data converted to digital signals.

The recording system in this case is adapted to carry out control to record digital audio data reproduced from a compact disc (CD), which is a reproduction-only optical disc 10, to a magneto-optical disc 20 which enables re-recording of data.

The recording system of the present embodiment has a read-decode section 11, a recording control section 12, a write-encode section 13, an identification signal extraction section 14, a system control section 15, a key input section 16, a copy record information memory 17, an accounting authentication section 18, and a card reader/writer 19, as shown in Fig.2.

In this embodiment, the read-decode section 11 reads out a digital audio signal recorded on the reproduction-only optical disc 10 and carries out reproduction of the digital audio signal as 16-bit data of a sampling frequency of 44.1 kHz, for example. The read-decode section 11 reads out the ISRC (International Standard Recording Code) and the track number indicating the number of a tune on the optical disc, and sends them to the identification signal extraction section 14. The identification signal extraction section 14 supplies these ISRC and track number to the system control section 15 as the identification signal of the read-out audio signal.

The recording control section 12 controls whether copy and recording is to be executed or not in accordance with control of the system control section 15, as will be described later. When the recording control section 12 carries out control to execute copy and recording, the write-encode section 13 encodes the digital audio signal to data conformable to the magneto-optical disc 20 which enables recording of information signals, and executes writing to this disc 20. For example, the digital audio signal is converted to the ATRAC (Adaptive Transform Acoustic Coding) format and then written onto the magneto-optical disc 20.

The key input section 16 is used for the user to transmit a copy instruction to the system control section 15 and also to carry out various inputs.

When copy and recording is executed in this system, the record of that copy and recording is stored into the copy record information memory 17 by the system control section 15. In this embodiment, the ISRC and track number with respect to the copied and recorded digital audio data are recorded as the copy record. In this embodiment, the same identification signal is recorded only once in the copy record information memory 17.

The accounting authentication section 18 is for delivering information about approval of accounting from the user to the system control section 15. The accounting authentication section 18 in this embodiment is connected to the card reader/writer 19, so that as the user loads the IC card 30 into the card reader/writer 19, the copy fee is drawn from the remaining amount stored on an IC card 30. In the case where the copy fee has been drawn, the accounting authentication section 18 considers that the approval of accounting by the user has been obtained, and sends the information about accounting approval to that effect to the control section 15. On the other hand, in the case where the copy fee could not drawn due to insufficient remaining amount on the IC card 30, the accounting authentication section 18 sends the system control section 15 information to the effect that the approval of accounting by the user could not be obtained.

In this embodiment, the same identification signal as the identification signal written into the copy record information memory 17, that is, the ISRC and track number, is written onto the IC card 30 by the card reader/writer 19. The copy record information written onto the IC card 30 includes at least each identification signal and information indicating the number of time of copy of the information signal having the corresponding identification signal. For example, every time copy is executed, the identification signal is written with the duplication permitted. In this case, the number of the same written identification signals serves as the information indicating the number of times of copy of the information signal having the corresponding identification signal. As the information indicating the number of times of copy of each information signal, the number of time of copy of each information signal may be directly recorded into the copy record information memory 17, with the identification signal corresponding thereto.

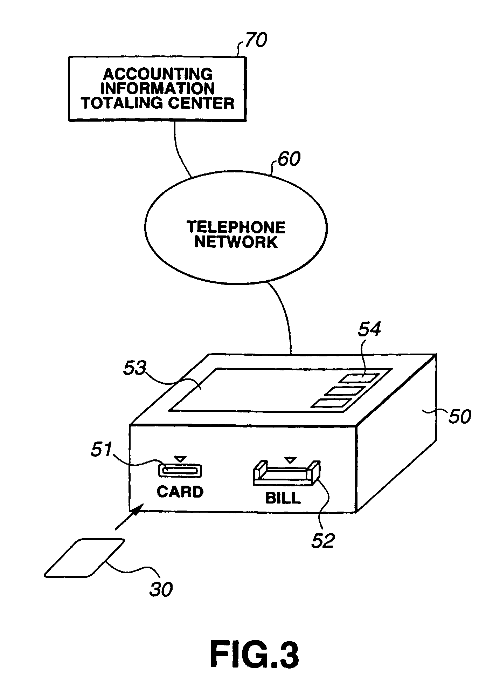

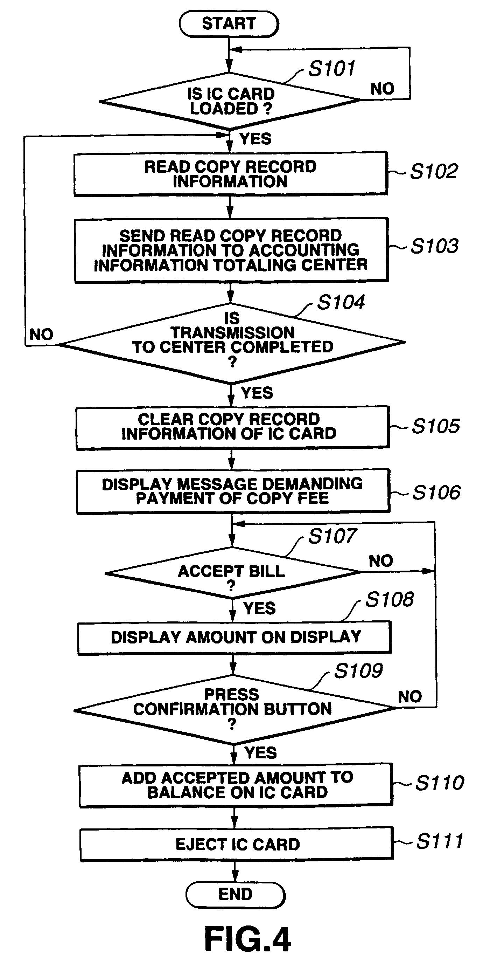

The addition of the copy fee to the remaining amount on the IC card 30 is carried out by a dedicated terminal device 50 as an accounting terminal device as shown in Fig.3, installed at a record shop or the like, which is an information provider. The operation of the dedicated terminal device 50 will now be described with reference to the flowchart of Fig.4.

As the user at step S101 loads the IC card 30 into a card insertion port 51 of the dedicated terminal device 50, the dedicated terminal device 50 detects the loading of the IC card from the card insertion port 51. At step S102, the dedicated terminal device 50 reads the copy record information including the identification signal of the information signal copied and recorded on the IC card 30 and the information indicating the number of times of copy of each information signal.

At step S103, the dedicated terminal device 50 transfers the copy record information it read to an accounting information totaling center 70, for example, through a telephone network 60. Then, at step S104, the dedicated terminal device 50 discriminates whether the transfer of the copy record information to the accounting information totaling center 70 is completed or not. If the transfer is completed, the dedicated terminal device 50 repeats the processing of steps S102 and S103. On completion of the transfer, the dedicated terminal device 50 clears the copy record information on the IC card 30 at step S105.

After that, at step S106, the dedicated terminal device 50 displays a message demanding the user to insert a bill as the copy fee, on a display screen made up of a touch-panel liquid crystal display. Since the user watches the display screen 53 of the display and inserts a bill of the necessary amount from a bill insertion port of the dedicated terminal device 50, the dedicated terminal device 50 accepts the inserted bill at step S107. At step S108, the dedicated terminal device 50 displays the amount of the inserted bill on the display screen 53. As a confirmation button icon 54 displayed on the display screen 53 is pressed by the user at step S109, the dedicated terminal device 50 at step S110 adds the amount of the bill inserted from the bill insertion port to the remaining amount on the IC card 30. After that, at step S111, the dedicated terminal device 50 ejects the loaded IC card 30 and ends the processing.

The accounting information totaling center 70 totals the copy record information transferred from many dedicated terminal devices 50 installed at record shops or the like at various locations, and examines which tune is copied for what number of times. From the totaling result, the accounting information totaling center 70 determines distribution of the copyright royalty to the copyright holder of each tune.

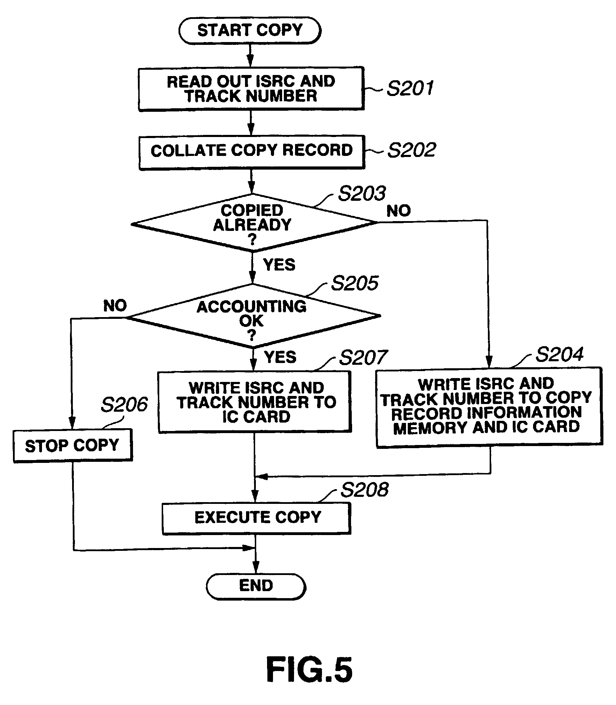

The copy operation in the system of Fig.2 will now be described further with reference to the flowchart of Fig.5. The flowchart shown in Fig.5 corresponds to the processing operation at the system control section 15. The processing routine of this flowchart starts when a copy instruction is inputted by the user through the key input section 16.

First, at step S201, the ISRC and track number are read out as copy target signals from the optical disc 10 together with a digital audio signal of the copy target and are transferred to the identification signal extraction section 14. The identification signal extraction section 14 extracts and transfers the identification signal to the system control section 15. The system control section 15, to which the identification signal is transferred, recognizes the identification signal of the copy target.

Next, at step S202, the system control section 15 searches the copy record information memory 17 for the ISRC and track number, and collates the ISRC and track number thus searched for with the ISRC and track number recognized as the identification signal of the copy target information.

At step S203, it is determined whether or not copy of the same information signal was already made in the past in the corresponding system, in accordance with whether or not the same ISRC and track number are already stored in the copy record information memory 17. If it is determined that the present copy is copy of a new information signal as a result of discrimination at step S203, the processing goes to step S204. After the ISRC and track number as the identification signal of the new information signal are recorded into the copy record information memory 17, the processing goes to step S208, and the recording control section 12 and the write-encode section 13 are controlled to execute the copy.

If it is determined that the copy was already made in the past as a result of discrimination at step S203, the precessing goes to step S205 and it is discriminated whether or not the approval of accounting by the user is obtained by the accounting authentication section 18. If the approval of accounting by the user cannot be obtained due to failure to draw the copy fee from the IC card 30 or for any other reason, the processing goes to step S206 to stop the copy.

If it is determined at step S205 that the approval of accounting by the user is obtained, the processing goes to step S207, and the ISRC and track number as the identification signal of the information signal of the copy target are written onto the IC card 30 by the card reader/writer 19. Then, the processing goes to step S208 to execute the copy.

In the above-described embodiment, unlimited first-generation copy can be prevented and the use who needs a plurality of first-generation copies can make the copy by paying the copy fee. Thus, the interest of the copyright holder who owns the work data and that of the user who uses it can be adjusted and the appropriate interest of the copyright holder can be protected.

In the foregoing embodiment, the approval of accounting by the user is carried out by using the IC card. However, a prepaid card having predetermined fee recorded thereon may also be used. In the case where such a prepaid card is used, the amount corresponding to the copy fee is drawn from the prepaid card every time copy is made, but the approval of accounting is carried out in accordance with whether the remaining amount is sufficient for the copy fee or not.

It is also possible to connect to the system control section 15 an accounting device connected with the accounting center through a communication channel such as a telephone line and to obtain the approval of accounting by the card number of a credit card or the like. In this case, when there is an inquiry about accounting approval from the system control section 15, the accounting device sends to the accounting center the card number of the credit card which is registered in advance to the accounting device by the user. The accounting device then receives a response to the effect that accounting is possible from the accounting center, and notifies the system control section 15 of the received response as the approval of accounting by the user.

It is also possible to make member registration to a predetermined management center in advance with respect to the copy of work data, then inquire of the management center about the member in execution of the copy, and consider that the approval of accounting is obtained when the member registration is confirmed. In this case, for the system control section 15, a communication section for the inquiry about the member through a communication channel such as a telephone line is provided at the management center. In this case, the fee is paid later to the management center on the monthly basis or the like.

In the foregoing embodiment, the remaining amount prepaid by the user is recorded on the IC card in advance, and the copy fee is subtracted from the remaining amount on the IC card every time copy and recording of the work data is carried out. However, it is also possible to record the bank account number registered by the user and the copy approval information onto the IC card in advance, and to use the bank account number and the copy approval information as the accounting approval information from the user while writing only the copy record onto the IC card. In this case, when the IC card is loaded into a dedicated terminal device at a record shop, the dedicated terminal device reads the bank account number and the copy record, then calculates the copy fee from the stored copy record, and draws the copy fee from the bank account. After transmitting the copy record to the accounting information totaling center, the dedicated terminal device clears the copy record information.

### [Second Embodiment]

In the above-described first embodiment, digital audio data is recorded onto a magneto-optical disc, which is a disc-shaped recording medium enabling re-recording of data, and the IC card 30 is separately prepared for accounting. In the present embodiment, however, a semiconductor memory 40 having a built-in IC is used as a recording medium for copy and recording, without using the IC card for accounting.

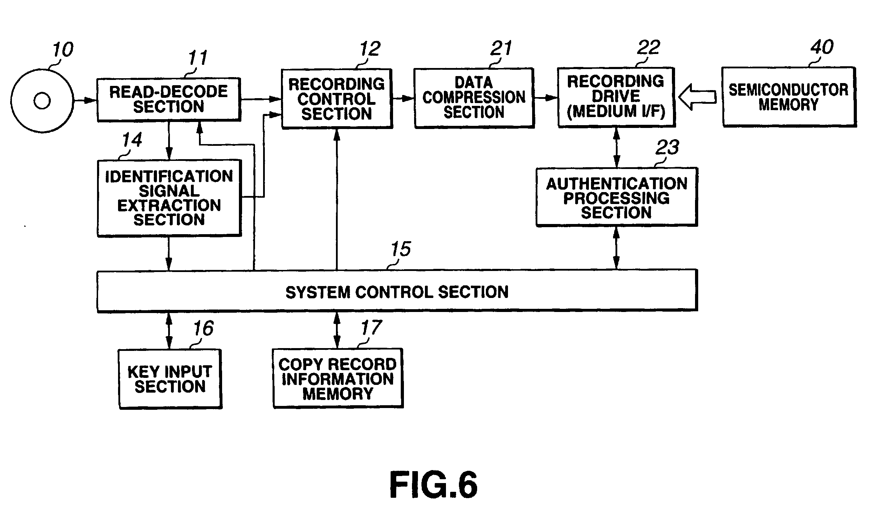

The recording system of this embodiment has a structure as shown in Fig.6. In the following description, the same parts as in the recording system of Fig.2 are denoted by the same numerals and will not be described further in detail.

The system shown in Fig.6 has a recording drive 22 for writing data to a semiconductor memory 40 having a built-in IC. This recording drive 22 constitutes a medium interface for connecting the semiconductor memory 40 to the system.

In this embodiment, audio data is compressed and recorded into the semiconductor memory 40. Therefore, audio data from the recording control section 12 is supplied to a data compression section 21 and compressed thereby in accordance with the ATRAC system or the MPEG (Moving Picture Experts Group) audio compression system, for example.

The semiconductor memory 40 has an accounting section included in the built-in IC, as will be described later, and the information contained in the built-in IC is encrypted. Thus, when the semiconductor memory 40 is loaded into the system of Fig.6 or into a dedicated terminal device installed at a record shop or the like, authentication is carried out between the recording system and the semiconductor memory 40 so that no third party can rewrite the information contents of the semiconductor memory 40. In the system shown in Fig.6, an authentication processing section 23 is provided for the above-described authentication.

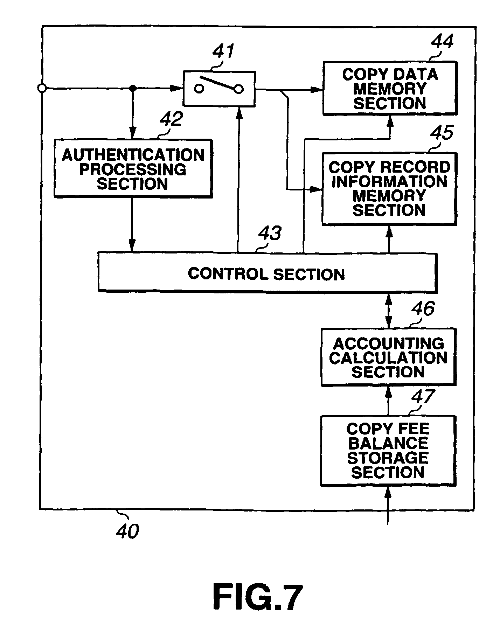

The semiconductor memory 40 used in this case has a switch circuit 41, an authentication processing section 42, a control section 43, a copy data memory section 44, copy record information memory section 45, an accounting calculation section 46, and a copy fee balance storage section 47, as shown in Fig.7.

The authentication processing section 42 checks whether or not authentication can be made between the semiconductor memory 40 and the recording system or dedicated terminal device, when the semiconductor memory 40 is connected to the copy system or dedicated medium interface. The check result is sent to the control section 43. If authentication could be made, the control section 43 turns on the switch circuit 41 to enable the recording system or dedicated terminal device to access the copy data memory section 44 and the copy record information memory section 45.

The ISRC and track number as the identification signal of audio data stored in the copy data memory section 44 are written into the copy record information memory section 45. The identification signal made up of the ISRC and track number may be duplicated, as in the previous embodiment where the IC card is used. As described above, the number of identification signals to be duplicated is the information indicating the number of times of copy. The information directly indicating the number of times of copy may be written corresponding to the identification signal into the copy record information memory section 45 of the semiconductor memory 40, as in the previous embodiment.

The accounting calculation section 46 carries out processing for subtracting the copy fee from the copy fee balance storage section 47, when the copy data is stored in the copy data memory section 44 and an accounting flag is raised. The accounting flag is sent from the system control section 15 to the semiconductor memory 40 through the authentication processing section 23 and the medium interface 22.

At the dedicated terminal device installed at a record shop or the like, the copy fee can be entered to the copy fee balance storage section 47 of the semiconductor memory 40, and the remaining amount in the copy fee balance storage section 47 is increased by the amount corresponding to the payment by the user.

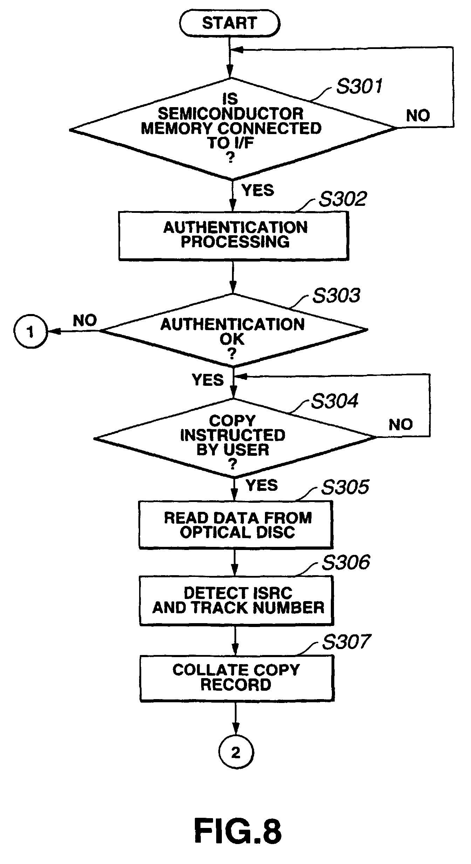

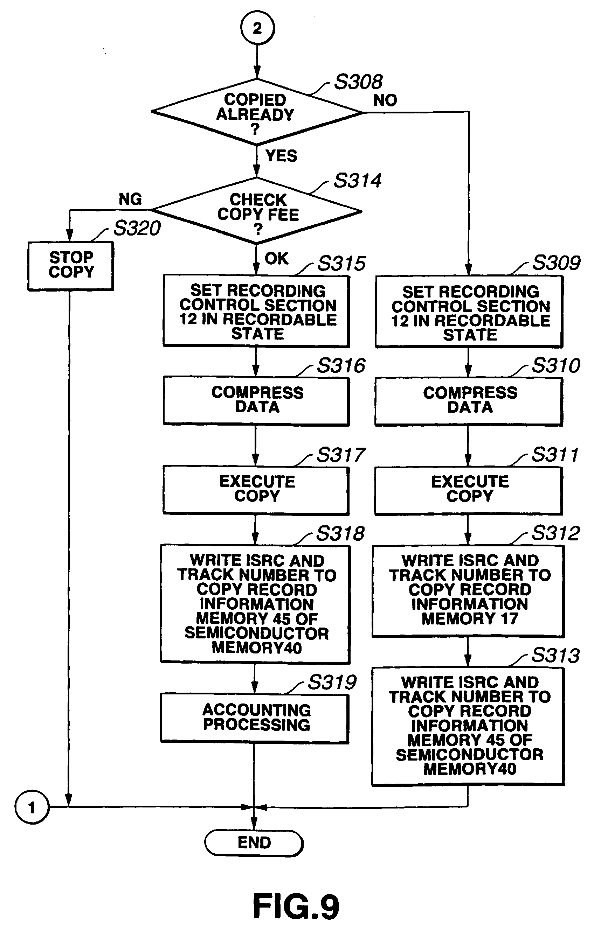

The copy operation of the second embodiment will now be described with reference to the flowcharts of Figs.8 and 9. The following operation is controlled by the system control section 15 or the control section 43.

First, prior to copy, at step S301, the system control section 15 of the recording system checks whether the semiconductor memory 40 is connected to the medium interface 22 or not. If it is determined that the semiconductor memory 40 is connected to the medium interface 22, the system control section 15 at step S302 carries out authentication processing of the semiconductor memory 40, and at step S303 determines the result of the authentication processing. If authentication of the semiconductor memory 40 is not obtained, the copy operation is not permitted and therefore this processing routine ends.

If authentication of the semiconductor memory 40 is confirmed as a result of the authentication processing at step S303, copy and recording of copy data to the semiconductor memory 40 is made possible and the system control section 15 waits for a copy instruction from the user through the key input section 16. On confirming the copy instruction, the system control section 15 at step S305 carries out reading of data from the optical disc 10. In this case, the audio data decoded by the read-decode section 11 is supplied to the recording control section 12. Since the identification signal made up of the ISRC and track number read out from the optical disc 10 is extracted by the identification signal extraction signal 14 and supplied to the system control section 15, the system control section 15 detects the identification signal at step S306.

At step S307, the system control section 15 compares the detected identification signal with the identification signal read out from the copy record information memory 17. Next, at step S308, it is discriminated on the basis of the result of the comparison whether or not copy has already been made in the recording device. If the identification signal stored in the copy record information memory 17 does not includes an identification signal coincident with the extracted identification signal, it is determined at step S309 that the present copy is the copy of an information signal on which the copy and recording has not been made, and the recording control section 12 is set in the recordable state. Then, at step S310, the audio data is compressed by the data compression section 21, and at step S311, the compressed audio data from the data compression section 21 is written into the copy data memory section 44 of the semiconductor memory 40 through the recording drive 22. At step S312, the identification signal of the copied audio data is written into the copy record information memory 17. At step S313, the ISRC and track number as the identification signal of the copy target information, extracted by the identification signal extraction section 14, are sent to the semiconductor memory 40 through the recording control section 12, the data compression section 21 and the recording drive 22, and then written into the copy record information memory section 45. In this case, since this is the first copy, the accounting flag is not raised in the information supplied from the system control section 15 to the semiconductor memory 40, and accounting/calculation of the copy fee is not carried out in the semiconductor memory 40.

In the case where the same identification signal as the identification signal extracted by the identification signal extraction section 14 already exists in the copy record information memory 17, it is determined at step S308 that the audio data to be copied and recorded was already copied and recorded in the past. Then, at step S314, the semiconductor memory 40 checks whether or not the remaining amount in the copy fee balance storage section 47 is sufficient for the present copy fee. The system control section 15 sends the semiconductor memory 40 a request for checking the remaining amount for the copy fee. On receiving the request, the control section 43 of the semiconductor memory 40 discriminates whether or not the remaining amount in the copy fee balance storage section 47 is sufficient for the present copy fee, and notifies the system control section 15 of the result of the discrimination through the authentication processing section 23.

From this notification, the system control section 15 at step S320 discriminates whether the remaining amount for the copy fee in the semiconductor memory 40 is insufficient or not. If it is determined that the remaining amount is insufficient, the system control section 15 controls the recording control section 12 to stop the copy and recording. If it is determined that the remaining amount for the copy fee in the semiconductor memory 40 is sufficient, the system control section 15 at step S315 controls the recording control section 12 to set the copy-recordable state. Then, at step S316, the audio data is compressed by the data compression section 21, and at step S317, the compressed audio data from the data compression section 21 is written into the copy data memory section 44 of the semiconductor memory 40 through the recording driver 22. At step S318, the identification signal of the audio data is written into the copy record information memory section 45. Next, at step S319, as an accounting flag is raised in the information supplied from the system control section 15 to the semiconductor memory 40, the processing for drawing the copy fee from the copy fee balance storage section 47 is carried out by the accounting calculation section 46. On completion of the accounting processing, the processing ends.

When the remaining amount in the copy fee balance storage section 47 becomes short, the user increases the remaining amount in the copy fee balance storage section 47 in the above-described manner by using the dedicated terminal device installed at a record shop or the like. In this case, similarly to the first embodiment, the dedicated terminal device reads the identification signal in the copy record information memory section 45 of the semiconductor memory 40 and transfers the identification signal to the accounting information totaling center through a communication channel. After reading and transmitting the copy record information to the accounting information totaling center, the dedicated terminal device clears the contents of the copy record information memory section 45.

Similarly to the above-described first embodiment, the accounting information totaling center totals all the copy record information it received, and examines which tune was copied for what number of times. The result of this examination is used as a reference for distributing the copyright royalty to the copyright holder.

### [Third Embodiment]

In the above-described two embodiments, the system has the reproducing machine and the recording machine which are integrated with each other. An exemplary copy control system having separate reproducing machine and recording machine will now be described.

In the following third embodiment, a digital audio signal is used as an information signal, and the copyright protection system using the SCMS system similar to the conventional system is employed when copy is made at a copy speed equal to the reproduction speed for a predetermined standard reproduction time as in the conventional case, that is, when copy is made at a speed equal to a predetermined real-time reproduction speed.

When copy is made at a speed higher than the predetermined real-time reproduction speed, in principle, one recording machine can make copy and recording free of charge only once, and the second and subsequent high-speed copies are prohibited in principle. In this third embodiment, the second and subsequent high-speed copies are made possible if the user approves the payment of the fee, that is, on condition that accounting is carried out.

In the following description, the copy at a speed equal to the predetermined real-time reproduction speed is referred to as normal-speed copy, and the copy at a speed higher than the predetermined real-time reproduction speed is referred to as high-speed copy.

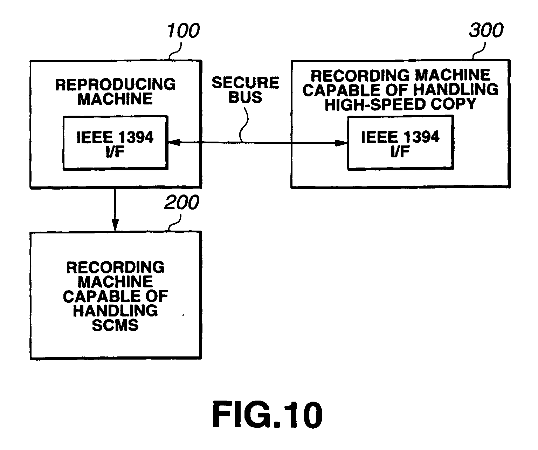

The copy control system of the third embodiment is constituted as shown in Fig.10, and executes copy control by using the conventional SCMS system when carrying out normal-speed copy. The normal-speed copy is carried out between a reproducing machine 100 and a recording machine capable of handling SCMS 200.

When high-speed copy is selected and instructed by the user, high-speed copy is carried out between the reproducing machine 100 and a recording machine capable of handling high-speed copy 300. In this embodiment, signal transmission between the reproducing machine 100 and the recording machine capable of handling high-speed copy 300 is carried out using a so-called secure bus SB of an IEEE (the Institute of Electrical and Electronics Engineers, Inc.) 1394 interface.

In this third embodiment, in carrying out normal-speed copy, for example, a magneto-optical disc is used as a recording medium. In carrying out high-speed copy, a semiconductor memory 40 as in the above-described embodiment is used as a recording medium.

High-speed copy can be carried out by setting a higher reproducing drive speed, for example, a higher disc rotation speed in the reproducing machine 100 than a predetermined real-time reproduction speed, and increasing the data transmission rate of the digital audio signal to the recording machine 300. In this embodiment, however, high-speed copy is carried out by recording the compressed and recorded audio data in the data-compressed state.

In the third embodiment as will be later described, audio data reproduced from a copy target disc is copied. In this case, audio data is compressed in accordance with the known ATRAC system or MPEG audio compression system and then recorded on the copy target disc. Data for copy control in accordance with the SCMS system is also recorded on the disc.

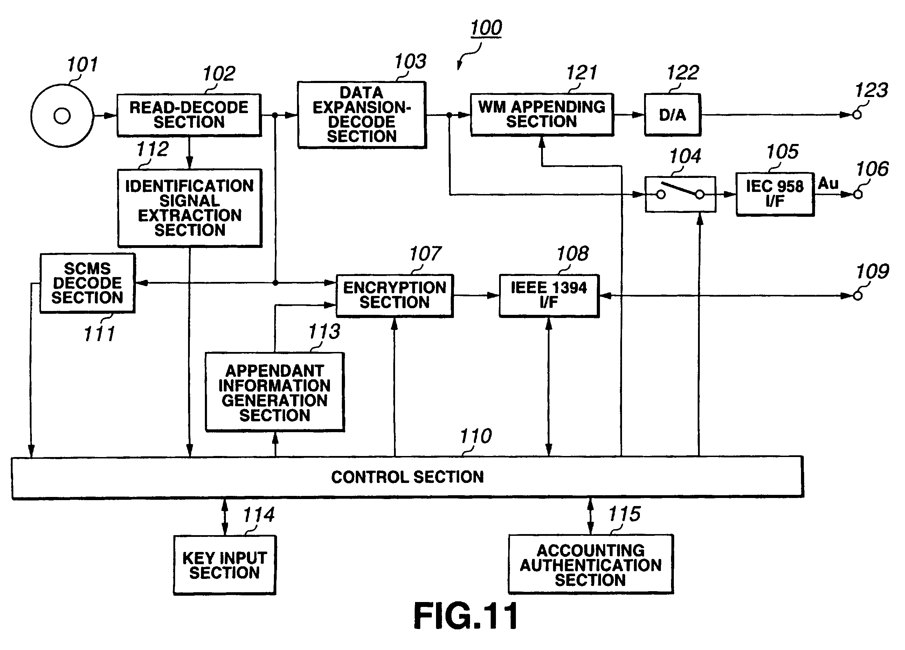

The reproducing machine 100 used in this embodiment has a structure as shown in Fig.11. Compressed audio data recorded on a copy target disc 101 loaded in the reproducing machine 100 is read out by a read-decode section 102, and supplied to a data expansion-decode section 103 so as to be expanded and decoded to a digital audio signal Au. The digital audio signal Au from the data expansion-decode section 103 is outputted to an output terminal 106 through a switch circuit 104 and through an IEC (International Electrotechnical Commission) 958 interface 105, which is a conventional digital signal interface. The output terminal 106 is connected with the above-described recording machine capable of handling SCMS 200. The recording machine capable of handling SCMS 200 is supplied with the digital audio signal Au, and normal-speed copy control is carried out in accordance with the SCMS system similar to that of the conventional example.

In this reproducing machine 100, the compressed digital audio data is outputted from the read-decode section 102 to an output terminal 109 via an encryption section 107 and an IEEE1394 interface 108. The output terminal 109 is connected with the recording machine capable of high-speed copy 300. In this case, prevention of unauthorized copy of this compressed digital output is realized by an IEEE1394 secure bus SB. The data from the read-decode section 102 is supplied to a SCMS decode section 111. Additional data for copy control in accordance with the SCMS system, included in the compressed data, is decoded and the decoded output is supplied to a control section 110. The decoded output of the additional data indicates whether the disc 101 is in the state of once-copy permitted or the state of copy prohibited. The control section 110 determines which state the disc 101 is in.

The data from the read-decode section 102 is supplied to the encryption section 107 and encryption based on an encryption key varying for each communication is performed on the compressed audio data under the control of the control section 110. The encrypted data from the encryption section 107 is supplied to the recording machine capable of handling high-speed copy 300, which is an electronic equipment of the output destination, through the IEEE1394 interface 108 and the output terminal 109. The IEEE1394 interface 108 converts the data in conformity with the IEEE1394 interface standard and outputs the compressed audio data. In this case, the control section 110 communicates with the equipment of the output destination through the IEEE1394 interface 108 and discriminates whether or not the equipment of the output destination is a device compliant with the IEEE1394 secure bus standard (hereinafter such device is referred to as a compliant device), and if it is compliant, whether the device is a recording device or not. In the reproducing machine 100 of this embodiment, the control section 110 determines whether or not encryption key information for decryption with respect to the encryption by the encryption section 107 should be transmitted or not, from the discrimination output of the copy control information from the SCMS decode section 111 and the discrimination information of the equipment of the output destination through the IEEE1394 interface 108. For example, if the equipment of the output destination is not a compliant device, the encryption key information is not transmitted to the device of the output destination. In the case where the device of the output destination is a recording device, even though it is a compliant device, the encryption key information is not transmitted thereto if the copy control information from the SCMS decode section 111 indicates the state of "copy prohibited".

In the third embodiment, if information about accounting approval by the user at an accounting authentication section 115 is not obtained by the control section 110, the encryption key information is not transmitted to the device of the output destination, either.

In this embodiment, it is possible to transmit appendant information in transmitting the compressed data through the IEEE1394 interface. In this embodiment, the ISRC and track number of the copy target audio data are extracted by an identification signal extraction section 112, and the extracted ISRC and track number are supplied to an appendant information generation section 113 through the control section 110. The information about the ISRC and track number as the identification signal is inserted into the corresponding compressed audio data packet, which is sent from the appendant information generation section 113 to the IEEE1394 interface 108 through the encryption section 107. The copy target audio data is sent together with the identification signal to the recording machine capable of handling high-speed copy 300.

A key input section 114 is means for the user to input an instruction of normal-speed copy or high-speed copy. High-speed copy of this embodiment is to copy the compressed data in the compressed state through IEEE1394. Normal-speed copy is to copy the audio data through IEC958. In this embodiment, designation of normal-speed copy or high-speed copy by the user from the key input section 114 may be carried out simply by designating the output terminal or designating the counterpart recording machine, or alternatively, by designating either digital audio signal transmission or compressed data transmission.

In this embodiment, analog audio output is also possible. The analog audio output in this case does not contain the copy control information of the SCMS system, and therefore the audio output in the state of analog signals can be freely copied by the user. In view of this, a copy control signal having the same semantic contents as the copy control information detected by the SCMS decode section 111 is superimposed as watermark information WM on the audio signal. The identification signal made up of the ISRC and track number is also superimposed as watermark information. The audio signal from the data expansion-decode section 103 is supplied to a watermark information WM appending section 121. The copy control signal having the same semantic contents as the copy control information detected by the SCMS decode section 111, and the identification signal made up of the ISRC and track number are supplied to the watermark information WM appending section 121 from the control section 110. The watermark information WM appending section 121 superimposes the above-mentioned additional information on the audio data by a method which does not affect the audio data. As the watermark WM information appending processing, there can be employed a method of, for example, diffusing the additional information by spectrum diffusion and embedding the diffused additional information into the audio data. The digital audio data from the watermark information WM appending section 121 is supplied to a D/A converter 122 and converted thereby to an analog audio signal, which is outputted to an external electronic equipment through an output terminal 123.

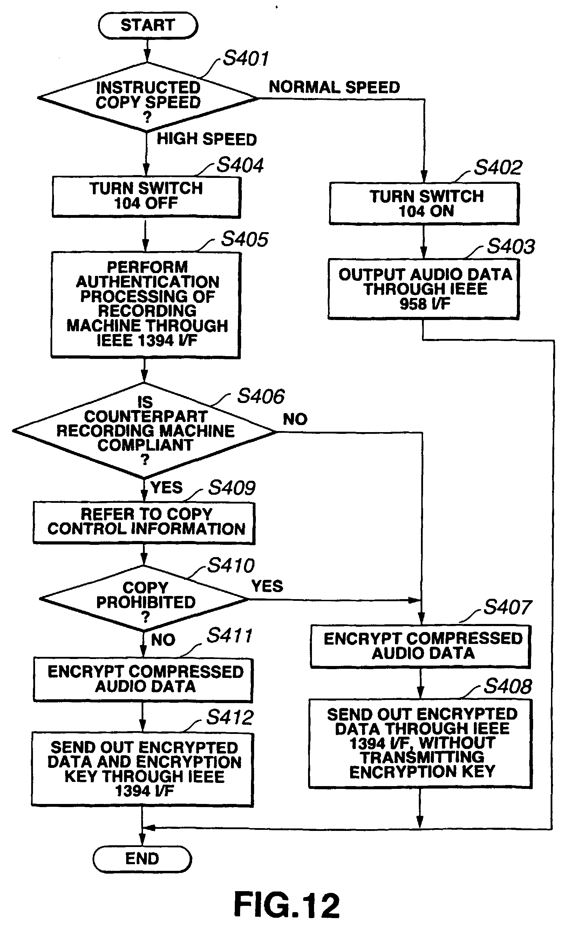

The operation of the reproducing machine 100 at the time of copy will now be described with reference to the flowchart of Fig.12.

First, at step S401, it is discriminated which of normal-speed copy and high-speed copy is selected by the user. If normal-speed copy is selected by the user, the switch circuit 104 is turned on by the control section 110 at step S402. At step S403, the audio signal Au is supplied to the recording machine capable of handling SCMS 200 through the IEC958 interface 105 and the output terminal 106. In this case, copy control similar to the conventional technique in accordance with the SCMS system is carried out.

If high-speed copy is selected by the user, the switch circuit 104 is turned off by the control section 110 at step S404. At step S405, the control section 110 carries out authentication processing with respect to the recording machine capable of high-speed copy 300 as a counterpart machine, through the IEEE1394 interface 108. That is, a predetermined authentication signal is sent to the recording machine capable of high-speed copy 300 as a counterpart machine. If the counterpart machine is a compliant recording machine, a predetermined response signal for authentication is sent back through the IEEE1394 interface 108 at step S406. Therefore, the control section 110 confirms the response signal and discriminates whether the counterpart machine is a compliant recording machine or not.

If it is determined that the counterpart machine is not a compliant device, the control section 110 at step S407 causes the encryption section 107 to encrypt the compressed audio data and to supply the encrypted data to the counterpart machine through the IEEE1394 interface 108 at step S408. However, the encryption key for decryption is not transmitted to the counterpart machine.

If it is determined that the counterpart machine is a compliant recording machine, the control section 110 at step S409 refers to the copy control information from the SCMS decode section 111, and at step 410, discriminates whether the copy control information indicates the state of "copy prohibited" or not. If it is determined that the copy control information indicates the state of "copy prohibited", the processing goes to step S407 to encrypt the compressed audio data and supply the encrypted audio data to the counterpart machine through the IEEE1394 interface 108. However, at step S408, the encryption key for decryption is not transmitted to the counterpart machine.

If it is determined at step S410 that the copy control information from the SCMS decode section 111 indicates the state of "copy permitted" or "once-copy permitted" instead of "copy prohibited", the control section 110 at step S411 causes the encryption section 107 to encrypt the compressed audio data. Then, at step S412, the control section 110 carries out control to supply the encrypted audio data to the counterpart machine through the IEEE1394 interface 108 and to transmit the encryption key for decryption to the recording machine.

Consequently, high-speed copy of the compressed audio data is made possible in the recording machine capable of handling high-speed copy 300, which is a compliant recording machine. In the recording machine capable of handling high-speed copy 300, high-speed copy of compressed audio data can be made free of charge only once and the second and subsequent high-speed copies are made possible on condition that accounting is carried out, as will be described later.

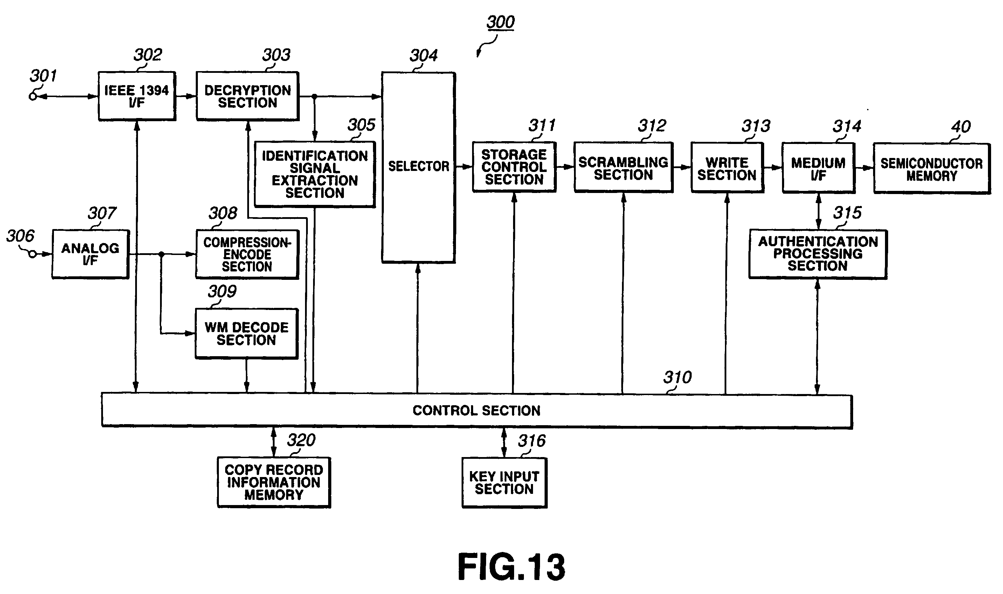

The recording machine capable of handling high-speed copy 300, which is a compliant recording machine, will now be described with reference to Fig.13.

This recording machine capable of handling high-speed copy 300 has a digital input terminal 301 for an IEEE1394 interface and an analog input terminal 306, as shown in Fig.13. The digital input terminal 301 is connected to an IEEE1394 interface 302. This IEEE1394 interface 302 carries out processing to restoring the data from the data converted in conformity with the IEEE1394 bus interface standard. The data from the IEEE1394 interface 302 is supplied to a decryption section 303. As described above, with respect to information such that the copy of the information signal by the equipment connected to the digital input terminal 301 is determined as being possible, the encryption key for decryption is sent from the equipment. When this encryption key information is obtained, the decryption section 303 can decrypt the data from the IEEE1394 interface 302 so as to restore the compressed audio data. The restored compressed audio data is supplied to a selector 304 and is also supplied to an identification signal extraction section 305. The identification signal extraction section 305 extracts the identification signal contained in the compressed audio data from the decryption section 303 and supplies the identification signal to a control section 310 as the information for copy recording control, which will be described later.

The audio information inputted through the analog input terminal 306 is supplied to a compression-encode section 308 through an analog interface 307, then compressed thereby, and supplied to the selector 304. The audio information from the analog interface 307 is supplied to a watermark information WM decode section 309. The watermark information WM decode section 309 extracts and decodes the copy control information and identification information superimposed on the audio information as the watermark information WM, and supplies the decoded watermark information to the control section 310 as the information for copy recording control, which will be described later.

The selector 304 selects and outputs either the data from the decryption section 303 or the data from the encode section 308 in accordance with a selector control signal corresponding to the input/selection from the user. The output data from the selector 304 is supplied to a recording control section 311. In accordance with a control signal from the control section 310, the recording control section 311 does not output the audio data from the selector 304 to a subsequent circuit section if the copy is prohibited, or alternatively, outputs the audio data from the selector 304 to the subsequent circuit section so as to execute recording if the copy is permitted.

In the recording machine 300 shown in Fig.13, the output from the recording control section 311 is supplied to a scrambling section 312. The scrambling section 312 performs encryption processing, that is, predetermined scrambling processing, on the audio data from the recording control section 311. Under the control of the control section 310, a write section 313 performs write processing of the audio data from the scrambling section 312. A medium interface 314 acts as a recording drive for a semiconductor memory 40 and also acts as an interface for authentication of the semiconductor memory 40. An authentication processing section 315 is adapted for performing authentication processing of the semiconductor memory 40. The semiconductor memory 40 is the same as the semiconductor memory described above with reference to Fig.7. Through the authentication processing section 315, authentication and data encryption are carried out between the semiconductor memory 40 and the control section 310 so that the third party cannot arbitirarily rewrite the information contents of the semiconductor memory 40.

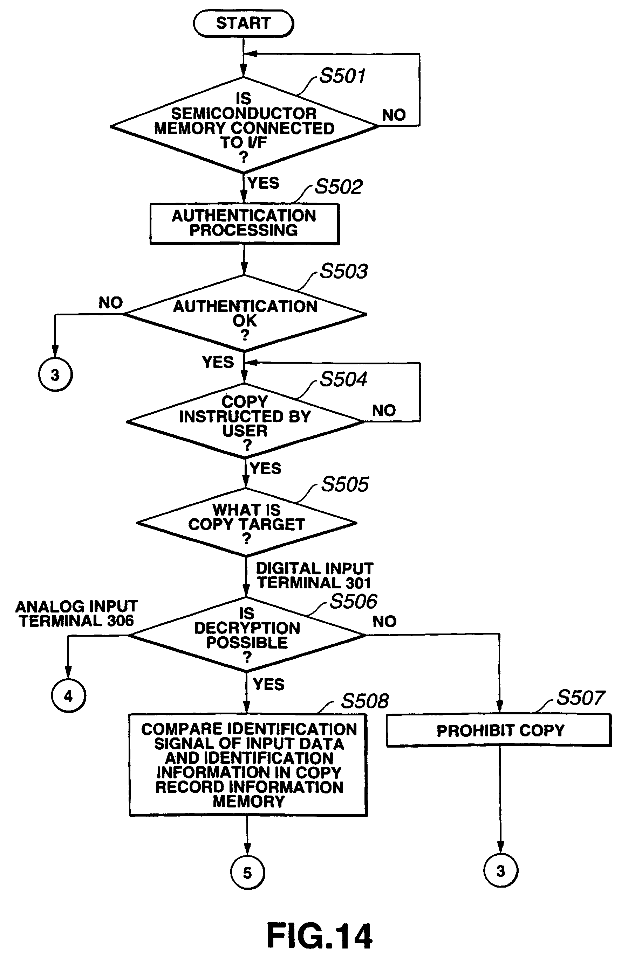

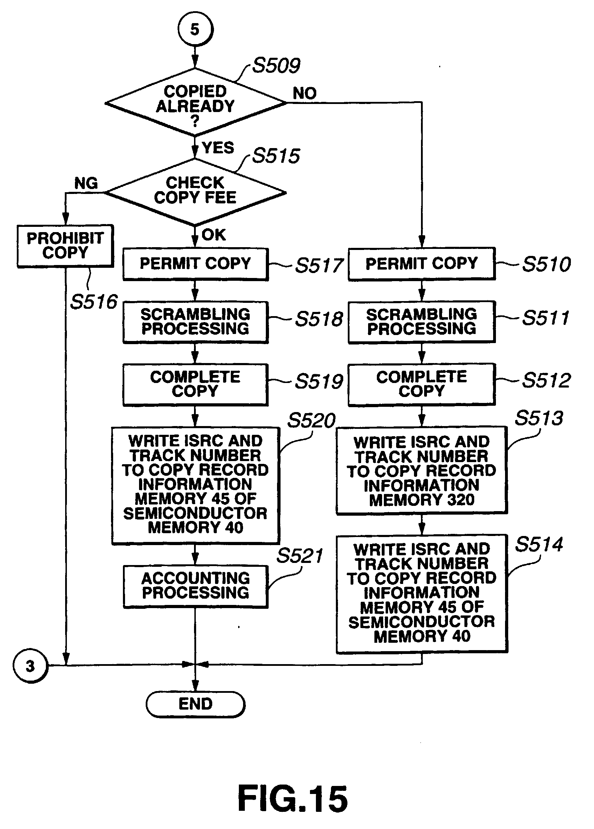

The control section 310 performs copy control of the recording machine 300 in accordance with the flowcharts of Figs.14, 15 and 16.

Prior to the copy, at step S501, the control section 310 of the recording machine 300 checks whether or not the semiconductor memory 40 is connected to the medium interface 314. If it is determined that the semiconductor memory 40 is connected to the medium interface 314, the authentication processing of the semiconductor memory 40 is carried out by the authentication processing section 315 at step S502. At step S503, the control section 310 discriminates the result of the authentication processing. If the authentication of the semiconductor memory 40 is not confirmed, the copy operation is not permitted and therefore this processing routine ends.

If the authentication of the semiconductor memory 40 is confirmed as a result of the authentication processing at step S503, the copy and recording of the copy data to the semiconductor memory 40 is possible. Then, at step S504, the control section 310 waits for a copy instruction from the user through the key input section 316.

At step S505, the control section 310 discriminates the selection input of input information by the user so as to discriminate which input terminal the copy target information signal is from. If the copy target is the compressed digital data from the digital input terminal 301, the control section 310 at step S506 discriminates whether decryption is possible or not. As described above, if the copy control information of the SCMS system indicates the state of "copy prohibited", the encryption key is not sent from the reproducing device. Therefore, the decryption section 303 cannot carry out decryption and the control section 310 at step S507 controls the recording control section 311 to prohibit the copy.

When decryption can be carried out, the copy control information indicates the state of "copy permitted" or "once-copy permitted" and therefore the copy-recordable state is set. In this case, similar to the above-described case, with respect to the information signal which is stored in the copy record information memory 320 and was copied in the past, actual copy is permitted on condition that accounting is carried out. Specifically, the output of the decryption section 303 is supplied to the identification signal extraction section 305, and the identification signal made up of the ISRC and track number is extracted and supplied to the control section 310. The control section 310 at step S508 compares the identification signal from the identification signal extraction section 305 with the identification signal which is stored in the copy record information memory 320 and was copied in the past. On the basis of the comparison result, the control section 310 at step S509 discriminates whether or not the audio signal is the audio signal having the identification signal which was already recorded.

If the identification signal coincident with the extracted identification signal is not found in the identification signal stored in the copy record information memory 320, the control section 310 at step S510 determines that the present copy is the first copy and permits the copy free of charge. Then, at step S511, the compressed audio data from the selector 304 is supplied to the scrambling section 312 through the recording control section 311 and predetermined scrambling processing (encryption processing) is performed thereon. At step S512, the data is written into the semiconductor memory 40 via the write section 313 and the medium interface 314, similarly to the second embodiment.

At step S513, the identification signal of the copied and recorded audio data is written into the copy record information memory 320. In this case, at step S514, the ISRC and track number as the identification signal of the copy target information, extracted by the identification signal extraction section 305, are sent to the semiconductor memory 40 through the recording control section 311, the scrambling section 312, the write section 313 and the medium interface 314, and then written into the copy record information memory section 45 of the semiconductor memory 40. Since the present copy is the first copy, an accounting flag is not raised in the information supplied to the control section 310 to the semiconductor memory 40 and therefore accounting calculation of the copy fee is not carried out in the semiconductor memory 40.

If the same identification signal as the identification signal extracted by the identification signal extraction section 305 already exists in the copy record information memory 320, at step S515, it is determined that the audio data to be copied and recorded was already copied and recorded in the past, and the semiconductor memory 40 checks whether or not the remaining amount in the copy fee balance storage section 47 is sufficient for the present copy fee. That is, the control section 310 sends the semiconductor memory 40 a request for checking the remaining amount for the copy fee. On receiving the request, the control section 43 of the semiconductor memory 40 discriminates whether or not the remaining amount in the copy fee balance storage section 47 is sufficient for the present copy fee, and notifies the control section 310 of the discrimination result through the authentication processing section 315.

From this notification, the control section 310 at step S516 discriminates whether the remaining amount for the copy fee in the semiconductor memory 40 is insufficient or not. If it is determined that the remaining amount is insufficient, the control section 310 controls the recording control section 311 to prohibit the copy and recording. If it is determined that the remaining amount for the copy fee in the semiconductor memory 40 is sufficient, the control section 310 at step S517 controls the recording control section 311 to set the copy-recordable state. Next, at step S518, the compressed audio data from the selector 304 is transmitted through the recording control section 311 and scrambled (encrypted) by the scrambling section 312. At step S519, the scrambled audio data is written into the semiconductor memory 40 via the write section 313 and the medium interface 314.

At step S520, the ISRC and track number as the identification signal of the copy target information, extracted as the decoded output of the watermark information, are sent to the semiconductor memory 40 via the recording control section 311, the scrambling section 312, the write section 313 and the medium interface 314, and then written into the copy record information memory section 45. In this case, since an accounting flag is raised in the information supplied from the control section 310 to the semiconductor memory 40, the processing for drawing the copy fee from the copy fee balance storage section 47 is carried out by the accounting calculation section 46 at step S521. On completion of this accounting processing, the copy control processing for the input information from the input terminal 301 ends.

Although not shown in Fig.13, when the copy control information of the SCMS system is extracted from the decryption section 303 and the copy control information indicates the state of "once-copy permitted", the copy control information of the SCMS system to be added to the audio data for recording is rewritten so as to indicate the state of "copy prohibited", by the recording control section 311.

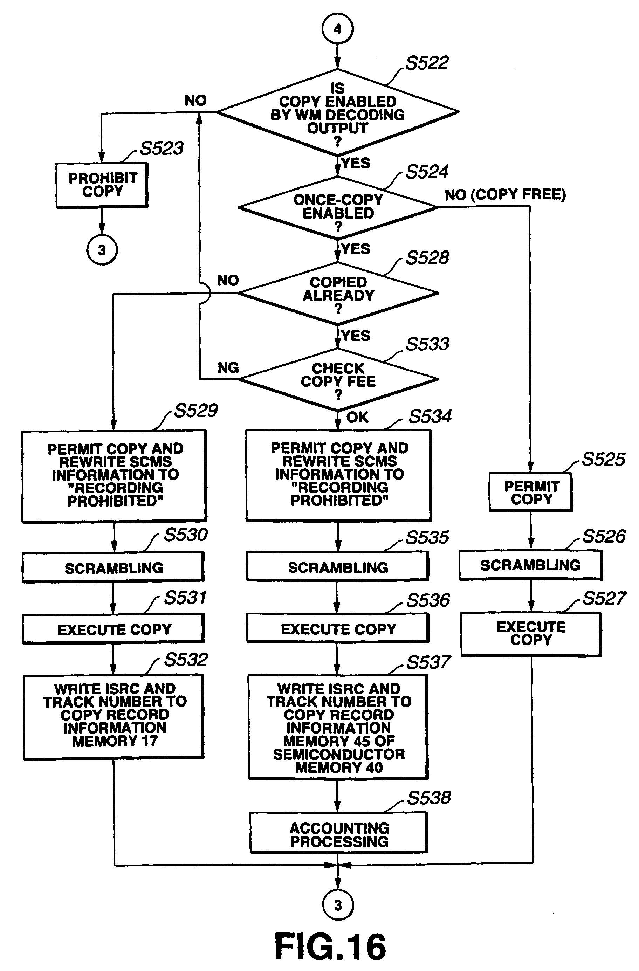

Next, the copy in the case where it is discriminated at step S504 that the copy target is the analog audio signal inputted through the input terminal 306 will be described with reference to the flowchart of Fig.16.

In the reproducing machine 100, as described above, the copy control information and the identification signal are superimposed on the analog audio signal as watermark information WM. This watermark information WM is detected by the watermark information decode section 309 and supplied to the control section 310. At step S522, the control section 310 discriminates whether the recording (copy) of the input information is possible or not, on the basis of the discrimination output of the watermark information WM. If it is determined that the recording is prohibited, the control section 310 at step S523 controls the recording control section 311 and the write section 313 so as not to execute the recording to the semiconductor memory 40.

If it is determined from the watermark information WM that the recording (copy) is possible, the control section 310 at step S524 discriminates whether or not the present state is the state of once-copy permitted (copy once) which requires rewrite of the copy control information. If it is determined from the watermark information WM that the state of copy permitted is set (copy free), the control section 310 at step S525 controls the recording control section 311 and the write section 313 to enable execution of the recording. At step S526, the compressed audio data from the compression-encode section 308 is supplied to the recording control section 311 through the selector 304, and then scrambled (encrypted) by the scrambling section 312. At step S527, the scrambled audio data is written into the semiconductor memory 40 through the write section 313 and the medium interface 314. In this case, since the input data is in the state of copy permitted (copy free), rewrite of the SCMS information added to the compressed digital data outputted from the recording control section 311 is not carried out. The identification signal is not recorded into the copy record information memory 320.

If it is discriminated at step S524 that the present state is the state of once-copy permitted (copy once) from the watermark information WM, at step S528, the identification signal is extracted and compared with the identification information in the copy record information memory 320 so as to discriminate whether or not the audio data having the corresponding identification signal was already copied and recorded.

If the identification signal coincident with the extracted identification signal is not found in the identification signal stored in the copy record information memory 320, the control section 310 at step S529 permits the copy and recording and causes the recording control section 311 to rewrite the SCMS information so as to indicate the state of "recording prohibited".

The processing subsequent to that in the recording control section 311 is similar to the above-described processing. At step S530, the audio data is scrambled (encrypted) by the scrambling section 312. At step S531, the audio data is written into the semiconductor memory 40 via the write section 313 and the medium interface 314. At step S532, the identification signal of the audio data is written into the copy record information memory 320.

If the control section 310 at step S528 determines that the audio data was already copied in the past, the control section at step S533 discriminates whether the accounting condition in the semiconductor memory 40 is met or not, similarly to the above-described manner. If the accounting condition is not met, the processing goes to step S523 to prohibit the copy. If the accounting condition is met, the control section 310 at step S534 determines to execute the recording and causes the recording control section 311 to rewrite the SCMS information to indicate the state of "recording prohibited".

The processing subsequent to that in the recording control section 311 is similar to the above-described processing. At step S535, the audio data is scrambled (encrypted) by the scrambling section 312. At step S536, the audio data is written into the semiconductor memory 40 via the write section 313 and the medium interface 314.

At step S537, the ISRC and track number as the identification signal of the copy target information, extracted as the decoded output of the watermark information, are sent to the semiconductor memory 40 through the recording control section 311, the scrambling section 312, the write section 313 and the medium interface 314, and then written into the copy record information memory section 45 of the semiconductor memory 40. In this case, since an accounting flag is raised in the information supplied from the control section 310 to the semiconductor memory 40, the processing for drawing the copy fee from the copy fee balance storage section 47 is carried out by the accounting calculation section 46 at step S538. On completion of this accounting processing, the processing routine ends.

In the third embodiment, as described above, in the case of normal-speed copy, the copy control in accordance with the conventional SCMS system is carried out, whereas in the case of high-speed copy, the first copy of an information signal can be carried out free of charge in one recording machine 300 but the second and subsequent copies of the same information signal are controlled so that the copy is permitted on condition that the predetermined copy fee is paid. Therefore, high-speed and unlimited first-generation copy can be prevented, thus securely protecting the interest of the copyright holder.

In the above-described embodiment, the first copy in one recording machine can be carried out free of charge even in the case of high-speed copy. However, it is also conceivable to permit the first copy, too, on condition that the copy fee is paid. Particularly high-speed copy is advantageous to the user because of the high copy speed, even though the first copy is permitted on condition that the copy fee is paid.

The accounting system is not limited to the system using the prepaid card, and the accounting authentication system using a telephone line or the like may also be used as described above. In such a case, it is possible to carry out accounting for each content by also sending the information of accounting target contents to the accounting center.

Although audio signals are used in the above description, the copy target information signals may also be image signals. Information signals such as computer data, which are not time series signals like audio signals or image signals, may also be used. In addition, a control signal for controlling another equipment may be used.

The information output unit is not limited to the above-described reproducing machine, and may be a device which temporarily stores the copy target information into a memory and reads out and outputs the information from the memory to a recording machine.

### Industrial Applicability

The present invention enables prevention of first-generation copy in a large quantity for a short period of time from one original source, and protection of the interest of the copyright holder. In the case of carrying out first-generation copy from the original source, the copy is permitted on condition that accounting is carried out. Thus, protection of the work can be realized while the balance of interest between the copyright holder and the user is achieved.

## Claims

1. An information signal recording device comprising:
recording means for recording an information signal onto a recording medium;
recording record storage means for storing the identifier of an information signal recorded on the recording medium by the recording means;
accounting means for carrying out accounting processing to a user;
identifier detection means for detecting the identifier of an information signal to be recorded by the recording means; and
control means for controlling the recording of the information signal to be recorded onto the recording medium by the recording means in accordance with the result of comparison between the identifier of the information signal detected by the identifier detection means and the identifier of the information signal stored in the recording record storage means and the accounting status obtained by the accounting means.

2. The information signal recording device as claimed in claim 1, wherein the recording means enables recording of the information signal to the recording medium at a speed higher than a predetermined recording speed, and the control means controls the recording of the information signal to be recorded onto the recording medium by the recording means in accordance with the result of comparison between the identifier of the information signal detected by the identifier detection means and the identifier of the information signal stored in the identifier storage means and the accounting status obtained by the accounting means when the information signal is recorded by the recording means at the speed higher than the predetermined recording speed.

3. The information signal recording device as claimed in claim 1, wherein the control means permits the recording of the information signal to be recorded onto the recording medium by the recording means when the same identifier as the identifier of the information signal detected by the identifier detection means is not stored in the recording record storage means, and the control means determines permission/prohibition of the recording of the information signal to be recorded onto the recording medium by the recording means in accordance with the accounting status obtained by the accounting means when the same identifier as the identifier of the information signal detected by the identifier detection means is stored in the recording record storage means.

4. The information signal recording device as claimed in claim 1, wherein the recording record storage means stores information indicating the number of times of recording corresponding to the identifier of the recorded information signal when the recording of the information signal onto the recording medium is carried out by the recording control means, and wherein the control means permits further recording of an information signal onto the recording medium on condition that accounting processing is carried out by the accounting means, when it is detected that the number of times of recording of the information signal to be recorded exceeds a predetermined number of times of recording permission from the information indicating the number of times of recording with respect to the information signal having the identifier stored in the recording record storage means which is the same as the identifier of the information signal detected by the identifier detection means.

5. The information signal recording device as claimed in claim 4, wherein the number of times of recording permission stored corresponding to the identifier into the recording record storage means is one.

6. The information signal recording device as claimed in claim 1, further comprising encryption means for encrypting the information signal before recording to the recording medium by the recording means.

7. The information signal recording device as claimed in claim 1, further comprising compression means for compressing the information signal before recording to the recording medium by the recording means.

8. The information signal recording device as claimed in claim 1, wherein the accounting means changes amount information for accounting stored in an accounting information storage medium, in accordance with the price of the recording of the information signal to the recording medium by the recording means.

9. The information signal recording device as claimed in claim 8, wherein the accounting means adds the price of the recording of the information signal to the recording medium by the recording means to the amount information in the accounting information storage medium.

10. The information signal recording device as claimed in claim 8, wherein the accounting means subtracts the price of the recording of the information signal to the recording medium by the recording means from the amount information in the accounting information storage medium.

11. The information signal recording device as claimed in claim 8, further comprising write means for writing onto the accounting information storage medium the identifier of the information signal recorded on the recording medium and the information indicating the number of times of recording of the information signal.

12. The information signal recording device as claimed in claim 1, wherein an accounting information area having at least amount information for accounting recorded therein is provided on the recording medium, and the accounting means changes the amount information stored in the accounting information area of the recording medium in accordance with the price of the recording of the information signal to the recording medium by the recording means.

13. The information signal recording device as claimed in claim 12, wherein the accounting means adds the price of the recording of the information signal to the recording medium by the recording means to the amount information in the accounting information area of the recording medium.

14. The information signal recording device as claimed in claim 12, wherein the accounting means subtracts the price of the recording of the information signal to the recording medium by the recording means from the amount information in the accounting information area of the recording medium.

15. The information signal recording device as claimed in claim 12, further comprising write means for writing onto the recording medium the identifier of the information signal recorded on the recording medium and the information indicating the number of times of recording of the information signal.

16. An information signal recording system comprising
output means for outputting an information signal;
recording means for recording an information signal outputted from the output means onto a recording medium;
recording record storage means for storing the identifier of an information signal recorded on the recording medium by the recording means;
accounting means for carrying out accounting processing to a user;
identifier detection means for detecting the identifier of an information signal to be recorded by the recording means; and
control means for controlling the recording of the information signal to be recorded onto the recording medium by the recording means in accordance with the result of comparison between the identifier of the information signal detected by the identifier detection means and the identifier of the information signal stored in the recording record storage means and the accounting status obtained by the accounting means.

17. The information signal recording system as claimed in claim 16, further comprising authentication means for carrying out authentication processing of the recording means, and transfer control means for carrying out transfer control of the information signal outputted from the output means to the recording means in accordance with the result of authentication by the authentication means.

18. The information signal recording system as claimed in claim 17, further comprising encryption means for encrypting the information signal outputted from the output means, wherein the transfer control means transfers the information signal encrypted by the encryption means and key information for decryption to the recording means when the recording by the recording means of the information signal outputted from the output means is permitted.

19. The information signal recording system as claimed in claim 18, further comprising decoding means for decoding the information signal encrypted by the encryption means, by using the key information, wherein the control means performs control so that the information signal decoded by the decoding means is recorded onto the recording medium by the recording means.

20. An accounting terminal device comprising:
connection means to which an accounting information storage medium is connected, the accounting information storage medium having recorded thereon accounting information related to recording of an information signal to a recording medium;
read means for reading out the accounting information stored on the accounting information storage medium connected to the connection means; and
accounting means for changing the accounting information.

21. The accounting terminal device as claimed in claim 20, wherein the accounting means changes amount information included in the accounting information in accordance with the amount of inserted money.

22. The accounting terminal device as claimed in claim 20, wherein the accounting means carries out accounting with respect to the bank account of the user and changes the accounting information stored in the accounting information storage medium, in accordance with the accounting information read out by the read means.

23. The accounting terminal device as claimed in claim 20, further comprising communication means for transmitting information through a predetermined communication channel to an accounting information totaling center, wherein on the accounting information storage medium, the identifier of the information signal recorded on the recording medium and the information indicating the number of times of recording of the information signal identified by the respective identifier are recorded, the identifier of the information signal recorded on the recording medium and the information indicating the number of times of recording of the information signal identified by the respective identifier being read out together with the accounting information by the read means, the accounting information, the identifier of the information signal recorded on the recording medium and the information indicating the number of times of recording of the information signal identified by the respective identifier being sent to the accounting information totaling center through the communication means.

24. A recording medium comprising:
an information signal recording section in which an information signal is recorded;
an amount information storage section for storing information related to the amount of money; and
control means for changing the information related to the amount of money stored in the amount information storage section and for changing the information related to the amount of money in accordance with an information input indicating that a predetermined amount of money has been paid, when the information signal is recorded into the information signal recording section.

25. The recording medium as claimed in claim 24, wherein the control means carries out subtraction processing with respect to the information related to the amount of money stored in the amount information storage section when the information signal is recorded into the information signal recording section, and the control means carries out addition processing with respect to the information related to the amount of money when payment information is inputted.

26. The recording medium as claimed in claim 24, further comprising a recording record storage section for recording at least the identifier of the information signal when the information signal is recorded into the information signal recording section.

27. An information signal recording method comprising:
a recording step of recording an information signal onto a recording medium;
a recording record storage step of storing the identifier of an information signal recorded on the recording medium at the recording step;
an accounting approval detection step of detecting accounting approval by a user;
an identifier detection step of detecting the identifier of an information signal to be newly recorded at the recording step; and
a control step of controlling the recording of the information signal to be newly recorded onto the recording medium in accordance with the result of comparison between the identifier of the information signal detected at the identifier detection step and the identifier of the information signal stored at the recording record storage step and the accounting status obtained at the accounting approval detection step.

28. An information signal recording method comprising
an output step of outputting an information signal;
a recording step of recording an information signal outputted at the output step onto a recording medium;
a recording record storage step of storing the identifier of an information signal recorded on the recording medium at the recording step;
an accounting approval detection step of detection accounting approval by a user;
an identifier detection step of detecting the identifier of an information signal to be newly recorded at the recording step; and
a control step of controlling the recording of the information signal to be newly recorded onto the recording medium in accordance with the result of comparison between the identifier of the information signal detected at the identifier detection step and the identifier of the information signal stored at the recording record storage step and the accounting status obtained at the accounting approval detection step.

29. An information signal recording method comprising:
a recording step of recording an information signal onto a recording medium;
a recording record storage step of storing the identifier of an information signal recorded on the recording medium at the recording step;
an identifier detection step of detecting the identifier of an information signal to be newly recorded at the recording step;
a comparison step of comparing the identifier of the information signal detected at the identifier detection step and the identifier of the information signal stored at the recording record storage step;
a step of permitting the recording of the information signal to be recorded onto the recording medium at the recording step, when the same identifier as the identifier of the information signal detected at the identifier detection step is not stored at the recording record storage step in accordance with the result of comparison at the comparison step;
an accounting approval detection step of detecting accounting approval by a user when the same identifier as the identifier of the information signal detected at the identifier detection step is stored at the recording record storage step in accordance with the result of comparison at the comparison step; and
a control step of controlling the recording of the information signal to be newly recorded onto the recording medium in accordance with the accounting approval status obtained at the accounting approval detection step.

30. An information signal recording method comprising
an output step of outputting an information signal;
a recording step of recording an information signal outputted at the output step onto a recording medium;
a recording record storage step of storing the identifier of an information signal recorded on the recording medium at the recording step;
an identifier detection step of detecting the identifier of an information signal to be newly recorded at the recording step;
a comparison step of comparing the identifier of the information signal detected at the identifier detection step and the identifier of the information signal stored at the recording record storage step;
a step of permitting the recording of the information signal to be recorded onto the recording medium at the recording step, when the same identifier as the identifier of the information signal detected at the identifier detection step is not stored at the recording record storage step in accordance with the result of comparison at the comparison step;
an accounting approval detection step of detecting accounting approval by a user when the same identifier as the identifier of the information signal detected at the identifier detection step is stored at the recording record storage step in accordance with the result of comparison at the comparison step; and
a control step of controlling the recording of the information signal to be newly recorded onto the recording medium in accordance with the accounting approval status obtained at the accounting approval detection step.

31. A terminal device control method comprising:
a connection step of connecting an accounting information storage medium with a terminal device, the accounting information storage medium having recorded thereon accounting information related to recording of an information signal to a recording medium;
a read step for the terminal device to read out the accounting information stored on the accounting information storage medium connected thereto; and
an accounting step for the terminal device to change the accounting information stored on the accounting information storage medium.

32. An information signal recording method comprising:
a recording step of recording an information signal onto a recording medium;
an amount information storage step of storing information related to the amount of money; and
a control step of changing the information related to the stored amount of money and for changing the information related to the amount of money in accordance with an information input indicating that a predetermined amount of money has been paid, when the information signal is recorded onto the recording medium.
